# EUROPÄISCHE PATENTSCHRIFT

(11) **EP 1 347 167 B1**
(45) Veröffentlichungstag und Bekanntmachung des Hinweises auf die Patenterteilung: **01.09.2004**
(21) Anmeldenummer: 02027328.0
(22) Anmeldetag: 07.12.2002
(51) Int. Cl.: F02M 25/07, F02M 59/46, F01L 9/04

(54) **Stellantrieb**
Actuating device
Dispositif de réglage

(30) Priorität: 20.03.2002 DE 10212189
(43) Veröffentlichungstag der Anmeldung: 24.09.2003
(73) Patentinhaber: Pierburg GmbH, 41460 Neuss (DE)
(72) Erfinder: Simons, Norbert, 40221 Düsseldorf (DE)
(74) Vertreter: Ter Smitten, Hans

(56) Entgegenhaltungen:
- EP-A- 0 939 245
- EP-A- 1 101 919
- US-A- 4 873 957
- US-A1- 2001 032 632

## Beschreibung

Die Erfindung betrifft eine Stellvorrichtung für Ventil- und Klappeneinrichtungen einer Verbrennungskraftmaschine mit einer Antriebseinheit, die aus einem in einem ersten Gehäuse angeordneten Antrieb, insbesondere einem Elektromotor mit einer Antriebswelle besteht und einer in einem zweiten Gehäuse, welches mit dem ersten verbunden ist, angeordneten Abtriebseinheit, die aus einer mit der Antriebswelle des Antriebes verbundenen Getriebeeinheit und einer in das zweite Gehäuse integrierten Lagereinheit besteht.

Bei heutigen Verbrennungskraftmaschinen gibt es eine Reihe von Regel- und Steueraufgaben, bei denen kleine Wege oder Winkel zu verstellen sind. Hierzu gehören sowohl die Verstellung von Saugrohrklappen oder Regelklappen, aber auch von Ventilen oder Drehschiebern. Diese Aufgaben wurden lange Zeit von Unterdruckaktuatoren ausgeführt. Da in neueren Fahrzeug- und Motorkonzepten der Unterdruck als Hilfsenergie immer häufiger entfällt, ist man dazu übergegangen, elektrische Antriebsmodule zu nutzen. Dadurch kann insbesondere die Steuer- und Regelgenauigkeit sowie die Verstellgeschwindigkeit verbessert werden. Solche elektrischen Antriebsmodule werden von einem Elektromotor angetrieben, dessen Wellenende entweder ein Zahnrad ist oder zumindest fest mit einem Zahnrad verbunden ist, welches über eine Getriebeeinheit eine Abtriebswelle antreibt. In das Gehäuse, welches den Elektromotor und die Getriebeeinheit umschließt, ist in der Regel eine Steuereinrichtung und Sensorik integriert, über die verschiedene Stellwinkel eingestellt und geregelt werden können. Aus der EP 1101919 ist ein Servomotor mit Schnechenantrieb und Federrüchstellvorrichtung bekannt.

Nachteil dieser bisher üblichen elektrischen Antriebsmodule ist der nach wie vor relativ große benötigte Bauraum sowie eine sehr geringe Flexibilität bezüglich des Einbaus der Antriebsmodule am Motor. So kann es notwendig werden, aufgrund des geringen zur Verfügung stehenden Bauraums ein bestehendes Modul umgestalten zu müssen, um es den Platzverhältnissen im Motorraum anzupassen. Dies verursacht sowohl zusätzliche Kosten in der Entwicklung als auch in der Umstellung des Produktionsprozesses.

Der Erfindung liegt nun die Aufgabe zugrunde, ein universell einsetzbares Stellelement zu schaffen, welches sowohl bei veränderten Platzverhältnissen als auch bei unterschiedlich hohen benötigten Stellkräften einsetzbar ist.

Diese Aufgabe wird dadurch gelöst, daß eine von einem Antrieb, insbesondere einem Elektromotor, angetriebene Getriebeeinheit mindestens eine radiale Abtriebswelle und eine axiale Abtriebswelle aufweist, wobei die Ventil- oder Klappeneinrichtungen über die radiale oder die axiale Abtriebswelle betätigt werden.

Da das Gehäuse um diese selbsthemmmende Getriebeeinheit zwei Verschraubungsebenen aufweist, kann demnach wahlweise eine der Abtriebswellen zum Antrieb von Ventil- oder Klappeneinrichtungen genutzt werden. Im einzelnen besteht die Abtriebseinheit dieser Stellvorrichtung aus einem auf der Motorantriebswelle befestigten Kegel- oder Schneckenrad, welches ein zweites größeres Kegel- oder Schneckenrad antreibt, das jedoch von seinem Durchmesser nicht größer ist als das Gehäuse des antreibenden Motors. Dieses zweite Schneckenrad ist fest verbunden mit einer Welle, die in einer im Gehäuse integrierten Lagereinheit gelagert ist und auf der sich ein zweites kleineres Schneckenrad oder schräg verzahntes Stirnrad befindet, welches die beiden schräg verzahnten größeren Stirnräder antreibt, die mit den beiden Abtriebswellen verbunden sind, die wiederum in der Lagereinheit gelagert sind. Diese Art eines selbsthemmmenden Getriebes ist extrem kompakt aufgebaut, so daß der Durchmesser des Gehäuses der Abtriebseinheit nicht größer ist als der der Antriebseinheit. Lediglich Anschlußflansch und Steckverbinderdose ragen über den Durchmesser der Antriebseinheit hinaus. Je nach vorhandenem Bauraum ist es jedoch auch vorstellbar, die Steckverbinderdose fluchtend zum Motorgehäuse anzuordnen. Die Abtriebseinheit und das Getriebe sind des weiteren so ausgelegt, daß verschiedene Motorbaugrößen und somit Motorleistungen gewählt werden können, je nachdem, welche Bauteile angetrieben werden sollen und welche Stellkräfte dafür benötigt werden. In das Gehäuse integriert ist, wie auch schon beim herkömmlichen elektrischen Antriebsmodul, eine Elektronikeinheit zur Steuerung und Sensorik des Antriebes, die über einen mehrpoligen Normstecker angesteuert wird. Als Sensor wird hier in der Regel ein berührungsloser, insbesondere ein Hall-Sensor verwendet. Die aufgrund der Getriebeanordnung zur Antriebswelle parallel verschobene axiale Abtriebswelle wie auch die radiale Abtriebswelle führen durch zwei entsprechende Durchgangsöffnungen im Gehäuse zu den anzutreibenden Bauteilen. Die Durchgangsöffnungen verfügen jeweils über vormontierte Dichtungen, so daß keine Verunreinigungen in das Gehäuse eindringen können.

Ein Ausführungsbeispiel ist in den Zeichnungen dargestellt und wird nachfolgend beschrieben.
Figur 1 zeigt die Seitenansicht einer solchen Verstellvorrichtung mit Antriebseinheit, Getriebeeinheit, Abtriebswellen und dem zugehörigen Gehäuse.

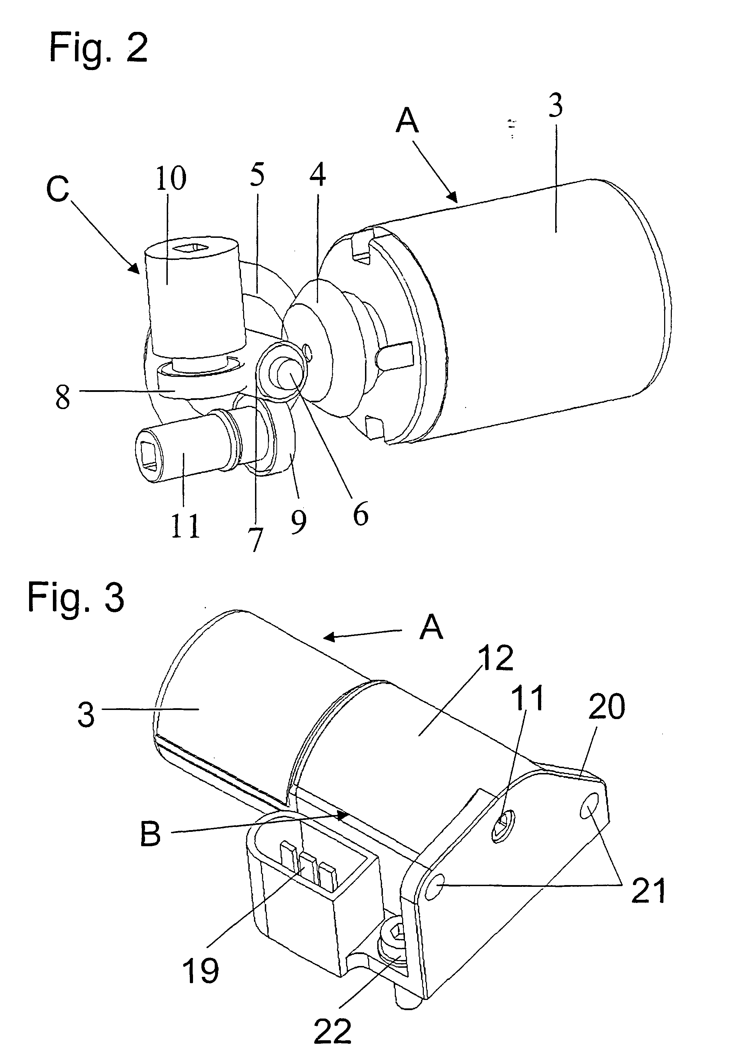

Figur 2 zeigt eine erfindungsgemäße Stellvorrichtung ohne Gehäuse in perspektivischer Darstellung.
Figur 3 zeigt die erfindungsgemäße Ausführungsform in perspektivischer Darstellung mit Gehäuse und Elektroanschluß.
Figur 4 zeigt die erfindungsgemäße Ausführungsform ohne das Gehäuse der Abtriebseinheit aber mit der Lagereinheit in perspektivischer Darstellung

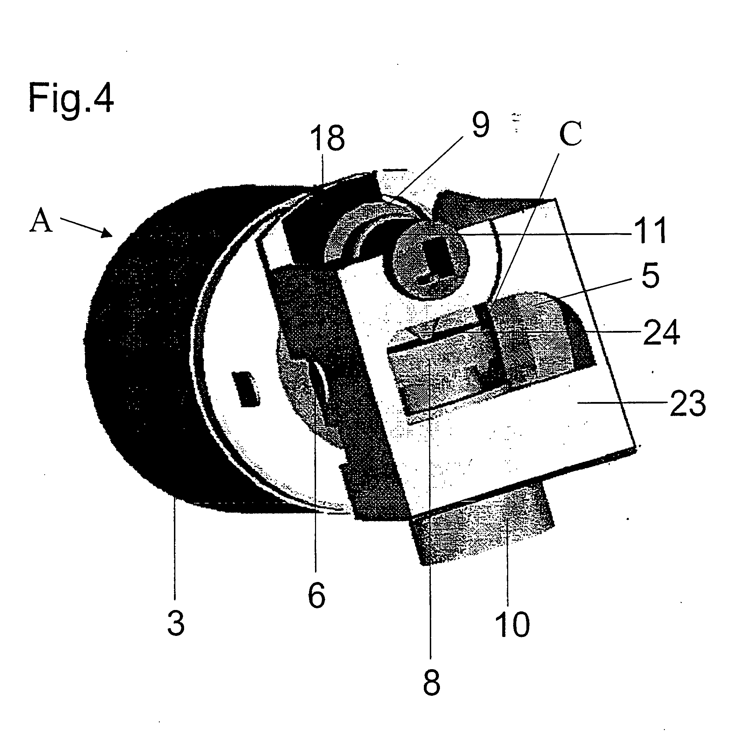

Die Antriebseinheit A der dargestellten Stellvorrichtung für Ventil- und Klappeneinrichtungen besteht aus einem Elektromotor 1 mit einer Antriebswelle 2 und einem Gehäuse 3. Auf der Antriebswelle 2 befindet sich ein erstes Schneckenrad 4, welches als Kegelrad ausgeführt ist und mit der Antriebswelle 2 drehfest verbunden und axial gegen Verschieben gesichert ist. Dieses Kegelrad 4 treibt über seine Verzahnung ein zweites Schneckenrad 5, welches auch als Kegelrad ausgeführt ist, an. Dieses Kegelrad ist drehfest mit einer Welle 6 verbunden. Die Mittellinie dieser Welle 6 schneidet die Mittellinie der Antriebswelle 2 in einem Winkel von 90°. Auf der Welle 6 befindet sich drehfest mit ihr verbunden ein schräg verzahntes kleines Stirnrad 7, welches in zwei weitere schräg verzahnte Stirnräder des radialen Abtriebs 8 und des axialen Abtriebs 9 eingreift. Das erste Stirnrad 8 befindet sich also auf der radialen Abtriebswelle 10, das zweite Stirnrad 9 auf der axialen Abtriebswelle 11. Das Gehäuse 12 verfügt über eine erste Durchgangsöffnung 13 für die radiale Abtriebswelle 10 und eine zweite Durchgangsöffnung 14, durch die die axiale Abtriebswelle bei der Montage der Abtriebseinheit B tritt. Beide Durchgangsöffnungen 13,14 weisen vormontierte Dichtungen 15 und 16 auf, die das Getriebe vor Verunreinigungen von außen im eingebauten Zustand schützen. Die Mittellinie der Welle 10 schneidet die Mittellinie der Antriebswelle in einem Winkel von 90°, während die Mittellinie der Abtriebswelle 11 parallel versetzt zur Mittellinie der Antriebswelle 2 ist. In das Gehäuse integriert ist des weiteren eine in Figur 4 angedeutete Elektronikeinheit 18 zur Steuerung und Sensorik, die im Ausführungsbeispiel über einen dreipoligen Normstecker 19 angesteuert wird. Dieser Anschlußstecker ist Teil des Gehäuses 12, welches des weiteren über einen L-förmigen Anschlußflansch 20 verfügt, der vier Durchgangsbohrungen aufweist, je zwei für den Anschluß der Stellvorrichtung in axialer Richtung 21 und zwei für den Anschluß in radialer Richtung 22 am Motorgehäuse.

In Figur 4 ist außerdem eine Lagereinheit 23 dargestellt, die zur Aufnahme und Lagerung der Welle 6 sowie der beiden Abtriebswellen 10,11 dient. Diese Lagereinheit ist so ausgeführt, dass die Getriebeeinheit C in ihr integriert ist und zunächst mit Ausnahme der radialen Abtriebswelle 10 zusammengesetzt werden kann. Sie beinhaltet außerdem die Steuerelektronik 18. Das Gehäuse 12 wird beim Zusammenbau über die Lagereinheit 23 mit der Getriebeeinheit C ohne die radiale Abtriebswelle geschoben. Die inneren Abmaße des Gehäuses 12 und die Außenmaße der Lagereinheit 23 sind dabei so gewählt, dass ein fester Sitz der Lagereinheit 23 nach Aufschieben des Gehäuses 12 über die Lagereinheit 23 entsteht und keine zusätzliche Befestigung der Lager- oder Getriebeeinheit C im Gehäuse notwendig ist. Erst daran anschließend kann die radiale Abtriebswelle 10 mit dem schräg verzahnten Stirnrad 8 durch die Durchgangsöffnung 13 mit der vormontierten Dichtung 15 des Gehäuses 12 in das Getriebe und somit in die Lagereinheit 23 gegen einen Anschlagpunkt 24 der Lagereinheit 23 geschoben und verklipst werden.

Der Durchmesser dieser Welle 10 muß dafür mindestens so groß sein wie der des Zahnrades 8, da sowohl eine Abdichtung an der Gehäusedurchtrittsöffnung 13 bestehen muß als auch das Zahnrad 8 durch diese Durchtrittsöffnung 13 passen muß. Aus diesem Grund die Welle 10 mit einem Absatz 17 zur Zahnradseite hin ausgeführt.

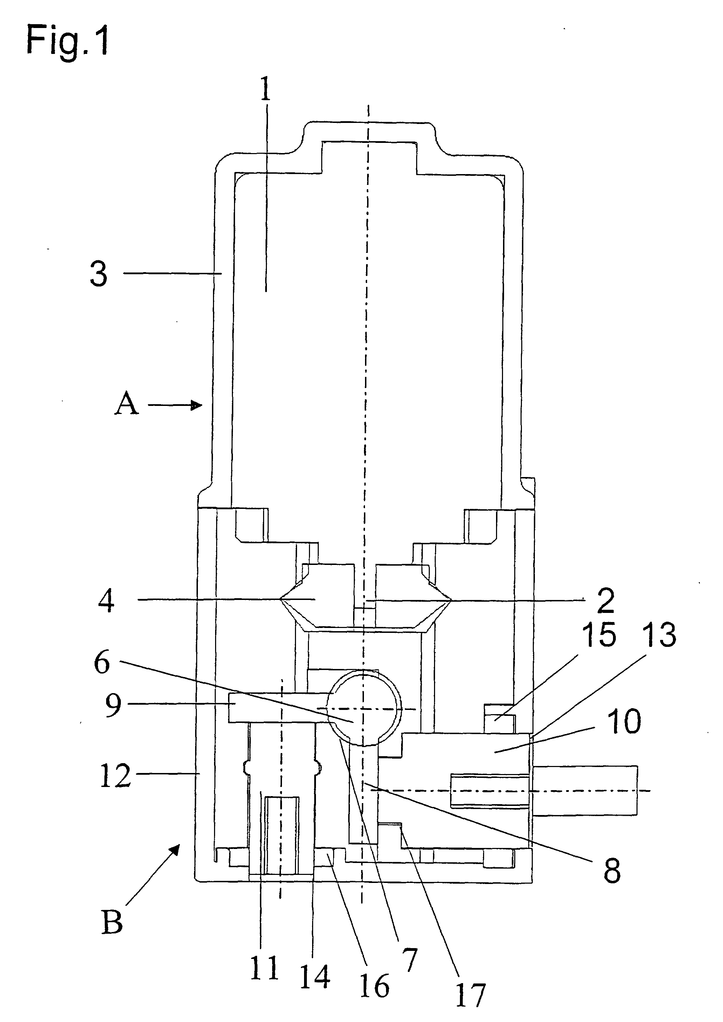

Wie aus Figur 1 ersichtlich, benötigt diese Ausführungsform extrem geringen Bauraum. Der gesamte vorhandene Durchmesser ist nicht größer als der der Antriebseinheit, also des Elektromotors. Das Gehäuse der Antriebseinheit 3 kann mit dem Gehäuse 12 auf verschiedene Arten verbunden werden. Vorzustellen sind dabei sowohl stoffschlüssige Verbindungen durch Schweißen oder Löten als auch Steckverbindungen bei entsprechender Ausführung von Anschlußvorrichtungen an den beiden Gehäusen. Auch eine Bördelung oder ähnliches ist denkbar.

Es wird deutlich, daß es sich um eine sehr kompakte modulare Bauweise handelt, bei der die dargestellte Abtriebseinheit B mit einem beliebigen Motor gekoppelt werden kann, d.h. daß Motorgröße und -leistung frei wählbar sind und somit auch bei unterschiedlichen benötigten Stellkräften die gleiche Stellvorrichtung genutzt werden kann und lediglich die Antriebseinheit ausgetauscht werden muß. Auch können durch die wahlweise Nutzung des radialen oder axialen Antriebs bzw. die wahlweise Befestigung zur axialen oder radialen Richtung vorhandene Bauräume im Motor optimal genutzt werden, ohne das Modul in seiner Bauweise verändern zu müssen. Mit einer solchen erfindungsgemäßen Ausführungsform, sind Übersetzungen im Verhältnis von etwa 1:30 möglich. Andere, eventuell auch größere Ausführungsformen, insbesondere des Getriebes sind genauso denkbar wie eine alternative Anordnung oder Größe der Steckverbinderdose je nach vorhandener Elektronik, betreffen die Erfindung aber nicht. Des weiteren kann hier eine Rückstellung der angesteuerten Klappen- oder Ventileinrichtungen über eine Drehfeder zur Sicherheitsabschaltung bei Elektronikausfall eingebaut werden.

## Patentansprüche

1. Stellvorrichtung für Ventil- und Klappeneinrichtungen einer Verbrennungskraftmaschine mit einer Antriebseinheit (A), die aus einem in einem ersten Gehäuse (3) angeordneten Antrieb, insbesondere einem Elektromotor (1) mit einer Antriebswelle (2) besteht und einer in einem zweiten Gehäuse (12), welches mit dem ersten verbunden ist, angeordneten Abtriebseinheit (13), die aus einer mit der Antriebswelle des Antriebes verbundenen Getriebeeinheit (C) und einer in das zweite Gehäuse (12) integrierten Lagereinheit (23) besteht, **dadurch gekennzeichnet, dass** die Getriebeeinheit C mindestens eine radiale Abtriebswelle (10) und eine axiale Abtriebswelle (11) aufweist, wobei die Ventil- oder Klappeneinrichtungen über die radiale oder die axiale Abtriebswelle (10,11) betätigt werden.

2. Stellvorrichtung nach Anspruch 1 **dadurch gekennzeichnet, dass** das Gehäuse (12) der Abtriebseinheit B über zwei Verschraubungsebenen entsprechend des Anschlusses der zwei Abtriebswellen (10,11) verfügt.

3. Stellvorrichtung nach Anspruch 1 oder 2 **dadurch gekennzeichnet, dass** die Abtriebseinheit B ein standardisiertes Modul ist, welches bezüglich Größe, Form und Stabilität so ausgelegt ist, daß Motorgröße und -leistung des Antriebes frei wählbar sind.

4. Stellvorrichtung nach einem der vorhergehenden Ansprüche **dadurch gekennzeichnet, dass** der Außendurchmesser des Gehäuses (12), in dem die Lagereinheit (23) und die Getriebeeinheit C der Abtriebseinheit B angeordnet sind, ohne Anschlußflansch (19) und Steckverbinderdose (18) aufgrund der kompakten Bauform nicht größer ist als der Außendurchmesser eines verwendeten Motorgehäuses (3).

5. Stellvorrichtung nach einem der vorhergehenden Ansprüche **dadurch gekennzeichnet, dass** in die Lagereinheit (23) eine Elektronikeinheit (18) zur Steuerung und Sensorik des Antriebes integriert ist, die über einen mehrpoligen Normstekker (19) ansteuerbar ist.

6. Stellvorrichtung nach einem der vorhergehenden Ansprüche **dadurch gekennzeichnet, dass** die Sensorik einen berührungslosen Sensor, insbesondere einen Hall-Sensor aufweist.

7. Stellvorrichtung nach einem der vorhergehenden Ansprüche **dadurch gekennzeichnet, dass** die axiale Abtriebswelle (11) parallel verschoben zur Antriebswelle (2) angeordnet ist.

8. Stellvorrichtung nach einem der vorhergehenden Ansprüche **dadurch gekennzeichnet, dass** das Gehäuse mindestens eine Durchgangsöffnung (13) radial zur Antriebswelle (2) der Antriebseinheit und eine Durchgangsöffnung (14) axial zur Antriebswelle (2) der Antriebseinheit aufweist durch die die Abtriebswellen (10,11) der Stellvorrichtung geführt sind, um den Kontakt zum anzutreibenden Bauteil herzustellen, und dass Dichtungen (15,16) im Gehäuse (12) vormontiert sind, die im fertig montierten Zustand von innen an der Gehäusewand anliegen und um die Abtriebswellen angeordnet sind und die Durchgangsöffnungen (13,14) mit den Abtriebswellen nach aussen abdichten.

## Claims

1. Adjustment device for valve and flap equipment of an internal combustion engine with a drive unit (A) that consists of a drive, in particular an electric motor (1) with a drive shaft (2), arranged in a first housing (3), and a driven unit (B), arranged in a second housing (12) that is connected to the first housing, which driven unit consists of a gear unit (C) connected to the drive shaft of the drive unit and a bearing unit (23) integrated in the second housing (12), **characterised in that** the gear unit C comprises at least one radial power take-off shaft (10) and one axial power take-off shaft (11), wherein the valve or flap equipment is actuated via the radial or the axial power take-off shaft (10, 11).

2. Adjustment device according to claim 1, **characterised in that** the housing (12) of the driven unit B has available two bolt assembly planes corresponding to the connection of the two power take-off shafts (10, 11).

3. Adjustment device according to claim 1 or 2, **characterised in that** the driven unit B is a standardised module that is designed as regards size, shape and stability so that the motor size and output of the drive can be freely chosen.

4. Adjustment device according to one of the preceding claims, **characterised in that** the external diameter of the housing (12) in which the bearing unit (23) and the gear unit C of the driven unit B are arranged, without connecting flange (19) and connector box (18) on account of the compact structural shape is not greater than the external diameter of a motor housing (3) that is employed.

5. Adjustment device according to one of the preceding claims, **characterised in that** an electronics unit (18) for the control and sensing equipment of the drive is integrated in the bearing unit (23), which electronics unit can be controlled via a multipole standard plug (19).

6. Adjustment device according to one of the preceding claims, **characterised in that** the sensing equipment comprises a contactless sensor, in particular a Hall sensor.

7. Adjustment device according to one of the preceding claims, **characterised in that** the axial power take-off shaft (11) is arranged parallel and displaced relative to the drive shaft (2).

8. Adjustment device according to one of the preceding claims, **characterised in that** the housing comprises at least one passage opening (13) arranged radially with respect to the drive shaft (2) of the drive unit and a passage opening (14) arranged axially with respect to the drive shaft (2) of the drive unit, through which the power take-off shafts (10, 11) of the adjustment device are guided, in order to make contact with the structural part to be driven, and that seals (15, 16) are premounted in the housing (12) that in the installed state rest from inside against the housing wall and are arranged around the power take-off shafts and seal externally the passage openings (13, 14) against the power take-off shafts.

## Revendications

1. Dispositif de réglage pour des systèmes de soupapes et de papillons d'un moteur à combustion interne, comprenant une unité d'entraînement (A), qui est constituée d'un moteur disposé dans un premier carter (3), en particulier d'un moteur électrique (1) avec un arbre moteur (2), et une unité de sortie (B) disposée dans un second carter (12), qui est relié au premier, laquelle est constituée d'une unité de transmission (C) reliée à l'arbre moteur du moteur et d'une unité de palier (23) intégrée dans le second carter (12), **caractérisé en ce que** l'unité de transmission (C) présente au moins un arbre de sortie radial (10) et un arbre de sortie axial (11), les systèmes de soupapes ou de papillons étant actionnés par l'intermédiaire de l'arbre de sortie radial ou de l'arbre de sortie axial (10, 11).

2. Dispositif de réglage suivant la revendication 1, **caractérisé en ce que** le carter (12) de l'unité de sortie (B) présente deux plans de vissage en correspondance du raccordement des deux arbres de sortie (10, 11).

3. Dispositif de réglage suivant l'une des revendications 1 et 2, **caractérisé en ce que** l'unité de sortie (B) est un module normalisé qui est conçu en taille, en forme et en stabilité de telle sorte que la taille et la puissance du moteur d'entraînement peuvent être librement choisies.

4. Dispositif de réglage suivant l'une des revendications précédentes, **caractérisé en ce que** le diamètre extérieur du carter (12) dans lequel sont disposées l'unité de palier (23) et l'unité de transmission (C) de l'unité de sortie (B) n'est pas supérieur en raison de la forme de construction compacte, sans bride de raccordement (19) et boîte de connecteurs (18), au diamètre extérieur d'un carter de moteur (3) utilisé.

5. Dispositif de réglage suivant l'une des revendications précédentes, **caractérisé en ce qu'**une unité électronique (18) pour la commande et la détection du moteur, qui peut être excitée par l'intermédiaire d'une fiche normalisée multipolaire (19), est intégrée dans l'unité de palier (23).

6. Dispositif de réglage suivant l'une des revendications précédentes, **caractérisé en ce que** le système de détection est un détecteur sans contact, en particulier un détecteur de Hall.

7. Dispositif de réglage suivant l'une des revendications précédentes, **caractérisé en ce que** l'arbre de sortie axial (11) est disposé en déport parallèle par rapport à l'arbre moteur (2).

8. Dispositif de réglage suivant l'une des revendications précédentes, **caractérisé en ce que** le carter présente au moins une ouverture de passage (13) radiale par rapport à l'arbre moteur (2) de l'unité d'entraînement et une ouverture de passage (14) axiale par rapport à l'arbre moteur (2) de l'unité d'entraînement, au travers desquelles sont guidés les arbres de sortie (10, 11) du dispositif de réglage pour établir le contact avec le composant à entraîner, et que des joints (15, 16) sont prémontés dans le carter (12), qui s'appliquent de l'intérieur sur la paroi du carter à l'état monté final et sont disposés autour des arbres de sortie et rendent étanches vers l'extérieur les ouvertures de passage (13, 14) avec les arbres de sortie.
